## Europäisches Patentamt

(19) **European Patent Office**

**Office européen des brevets**

(11) Veröffentlichungsnummer: **0 024 301**
**B1**

(12) **EUROPÄISCHE PATENTSCHRIFT**

(45) Veröffentlichungstag der Patentschrift:
14.03.84

(21) Anmeldenummer: **80104124.5**

(22) Anmeldetag: **16.07.80**

(51) Int. Cl.³: **B 23 F 9/10**

(54) Verfahren zur Herstellung von Kegel- und achsversetzten Zahnradpaaren.

(30) Priorität: **16.08.79 CH 7498/79**

(43) Veröffentlichungstag der Anmeldung:
**04.03.81 Patentblatt 81/9**

(45) Bekanntmachung des Hinweises auf die Patenterteilung:
**14.03.84 Patentblatt 84/11**

(84) Benannte Vertragsstaaten:
**BE CH DE FR GB IT LI SE**

(56) Entgegenhaltungen:
**DE - B - 1 115 104**
**DE - B - 1 122 808**
**GB - A - 513 094**

**Werkstatt und Betrieb 111. Jahrgang 1978 Heft 3, Seiten 179-183**

(73) Patentinhaber: **Werkzeugmaschinenfabrik Oerlikon-Bührle AG, Birchstrasse 155, CH-8050 Zürich (CH)**

(72) Erfinder: **Kotthaus, Erich, Schmittenackerstrasse 18, CH-8304 Wallisellen (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren zur Herstellung von Kegel- und achsversetzten Zahnradpaaren

Die Erfindung betrifft ein Verfahren zur Herstellung von Kegel- und achsversetzten Zahnradpaaren, deren Achsen sich, im Vergleich zum Durchmesser der Zahnräder, in großer Distanz kreuzen, durch Herausschneiden von Zahnlükken mit einem um eine Drehachse rotierenden Stirnmesserkopf.

Ein Verfahren zur Herstellung von Zahnradpaaren gemäß dem Oberbegriff des Patentanspruchs 1 ist aus der FR-A-912 304 bereits bekannt. Bei diesem bekannten Verfahren werden die beiden Zahnräder eines Kegelradpaares mit großer Kegeldistanz nicht an einem gemeinsamen Planrad, dessen Radius, wie für gewöhnliche Kegelradpaare üblich, der Kegeldistanz entspricht, abgewälzt. Dagegen werden die Kegelräder an einem Planrad abgewälzt, dessen Radius wesentlich kleiner ist als die Kegeldistanz. Dabei liegt das Zentrum des Planrades seitlich von einer gemeinsamen Mantellinie für die beiden Teilkegelflächen des Zahnradpaares.

Weitere besondere geometrische Bedingungen führen dazu, daß das verkleinerte Planrad im Bereiche des Eingriffes mit den Kegelrädern, insbesondere aber im Bereiche der gemeinsamen Mantellinie der beiden Teilflächen, sich mit dem großen Planrad, dessen Radius der Kegeldistanz entspricht, überdeckt. Mit diesem Verfahren lassen sich auf einer gegebenen Verzahnungsmaschine Kegelradpaare herstellen, deren Kegeldistanz, im Vergleich zu Kegelradpaaren die nach üblichen Verzahnungsverfahren hergestellt werden, mindestens doppelt so groß ist. Ein vernünftiges Verhältnis zwischen den Abmessungen der Verzahnungsmaschine und des herzustellenden Zahnrades kann so auch für diese Fälle gewahrt werden.

Der Nachteil dieses bekannten Verfahrens besteht darin, daß die Zahnflanken der Zähne beider Räder des Zahnradpaares gewälzt werden müssen. Dadurch muß gegenüber jenen Verfahren zur Herstellung von Kegelradpaaren üblicher Kegeldistanz, bei denen nur die Zahnflanken des einen Rades gewälzt werden, mehr Bearbeitungszeit aufgewendet werden. Beim bekannten Verfahren stimmt das theoretisch verlangte große Planrad mit dem verkleinerten Planrad nur auf einer Mantellinie durch einen Berechnungspunkt einer Zahnflanke genau überein. Das führt zu Wälzfehlern bei den Zahnflanken beider Räder des herzustellenden Zahnradpaares, so daß die Zähne nur in einem Berührungspunkt auf ihren Zahnflanken tragen.

Ein weiteres Verfahren zur Herstellung von Zahnradpaaren gemäß dem Oberbegriff des Patentanspruchs 1 ist für die Zahnräder, die im Vergleich zu den Maschinenabmessungen kleine Durchmesser aufweisen, aus »Werkstatt und Betrieb« 111 (1978) Heft 3, Seite 179—183 bekannt. Bei diesem bekannten Verfahren wird beispielsweise zur Herstellung des einen Zahnrades dessen Achse so eingestellt, daß es mit einem gedachten Gegenrad, dessen Achse mit einer Wälzachse konzentrisch ist, kämmt. Die Drehachse des Stirnmesserkopfes wird senkrecht zu einer diesem zugewandten Mantellinie der Teilfläche des Zahnrades gestellt. Durch Drehen des Stirnmesserkopfes um die Drehachse werden so die Zahnlücken herausgeschnitten. Zum Wälzen der Zahnflanken führt die Drehachse des Stirnmesserkopfes eine Bewegung um die Wälzachse aus.

Zur Herstellung des anderen Zahnrades oder Gegenrades wird dessen Achse koaxial zur Wälzachse eingestellt.

Die Drehachse des Stirnmesserkopfes wird ebenfalls senkrecht zu einer Mantellinie der Teilfläche dieses Gegenrades gestellt. Ein anschließendes Wälzen der Zahnflanken entfällt.

Für die Herstellung der beiden Räder, beispielsweise eines Kegelradpaares, muß die Drehachse des Stirnmesserkopfes in beiden Fällen senkrecht auf einer Mantellinie des Teilkegels des einen Rades stehen. Das bedeutet, daß der Winkel zwischen Drehachse und Wälzachse vom Kegelwinkel des einen Rades abhängt. Da bei bekannten Maschinen zur Herstellung von Kegelrädern die Drehachse des Stirnmesserkopfes nur bis zu einem beschränkten Neigungswinkel aus einer parallelen Stellung gegen die Wälzachse neigbar ist, ist der Bereich möglicher Kegelwinkel für das eine Rad des Kegelradpaares beschränkt, und zwar so, daß diese Beschränkung kleine Kegelwinkel verbietet.

Will man nun Kegelradpaare mit kleinen Achswinkeln auf bekannten Maschinen nach dem Erzeugungsgegenradverfahren herstellen, so ist das nicht oder nur sehr beschränkt möglich, weil dann ja beide Räder des Kegelradpaares kleine Kegelwinkel aufweisen.

Solche nach dem bisherigen Verfahren nicht herstellbare Zahnräder lassen sich oft nach dem bekannten Erzeugungsplanverfahren herstellen. Dabei wird die Achse des herzustellenden Zahnrades oder Gegenrades so gestellt, daß jeweils eine Mantellinie der Teilflächen des Zahnrades senkrecht zur Wälzachse und der zu dieser parallelen Drehachse und somit parallel zur Stirnfläche des Stirnmesserkopfes steht und die Wälzachse im Zentrum eines zur genannten Mantellinie parallel verlaufenden Erzeugungsplanrades schneidet. Bei diesem Verfahren müssen die Zähne von Zahnrad und Gegenrad gewälzt werden. Dies geschieht, indem die Drehachse des Stirnmesserkopfes um die Wälzachse geschwenkt wird.

Können nach diesem Verfahren Zahnradpaare mit beliebigen Achswinkeln oder Kegelwinkeln hergestellt werden, so sind hier insbesondere die Durchmesser von Zahnrädern mit kleinen Kegelwinkeln durch die vorhandenen Maschinen sehr beschränkt. Dies bei Kegelrädern, weil das Kegelzentrum auf der Wälzachse liegt und die Höhe dieses Kegels oder der Durchmesser des Erzeugungsplanrades durch den seitlichen Abstand von der Wälzachse zum Eingriffsort des Stirnmesserkopfes am Kegelrad abhängt. Bei gegebenem Kegelwinkel ergibt sich somit der Durchmesser des Kegelrades aus diesem beschränkten seitlichen Abstand.

Insbesondere ist aus der Schweizer Patentschrift Nr. 594 468 ein Erzeugungsgegenradverfahren zur Herstellung eines Stirnzahnradpaares bekannt. Bei diesem Verfahren führt die Herstellung des einen Stirnrades eines der Elemente — Stirnzahnrad oder Stirnmesserkopf — eine kreisbogenförmige Wälzbewegung um eine Wälzachse aus, die mit der Zahnradachse des Gegenrades zusammenfällt. Das Gegenrad wird im Einstechverfahren ohne Wälzbewegung erzeugt.

Es lassen sich nach diesem Verfahren nur Stirnräder, und zwar nur Stirnräder, deren Achsen parallel verlaufen, herstellen.

Die Erfindung, wie sie in den Ansprüchen gekennzeichnet ist, löst die Aufgabe, ein wirtschaftlicheres und geometrisch korrektes Verfahren zur Herstellung von Kegel- und achsversetzten Zahnradpaaren mit großer Kegeldistanz im Vergleich zum Durchmesser der Zahnräder zu schaffen.

Die durch die Erfindung erreichten Vorteile sind darin zu sehen, daß nun auf bestehenden Maschinen Zahnradpaare mit wesentlich größerer Kegeldistanz wirtschaftlich hergestellt werden können. Insbesondere besteht nun die Möglichkeit, nicht nur einzelne Zahnräder, sondern auch Zahnradpaare mit großer Kegeldistanz auf bekannten Maschinen herzustellen. Die so hergestellten Zahnradpaare weisen zwischen den Zahnflanken Linienberührung statt wandernde Punktberührung auf.

Im folgenden wird die Erfindung anhand von ein Ausführungsbeispiel darstellenden Zeichnungen näher erläutert. Es zeigt

Fig. 1 schematisch eine Anordnung zum Herstellen des einen Zahnrades eines Kegel- oder achsversetzten Zahnradpaares,

Fig. 2 eine Anordnung zum Herstellen des Gegenrades eines Kegel- oder achsversetzten Zahnradpaares,

Fig. 3 eine weitere Anordnung analog Fig. 1,

Fig. 4 eine Ansicht der Anordnung gemäß Fig. 1 und 3 zur Herstellung eines Kegelradpaares.

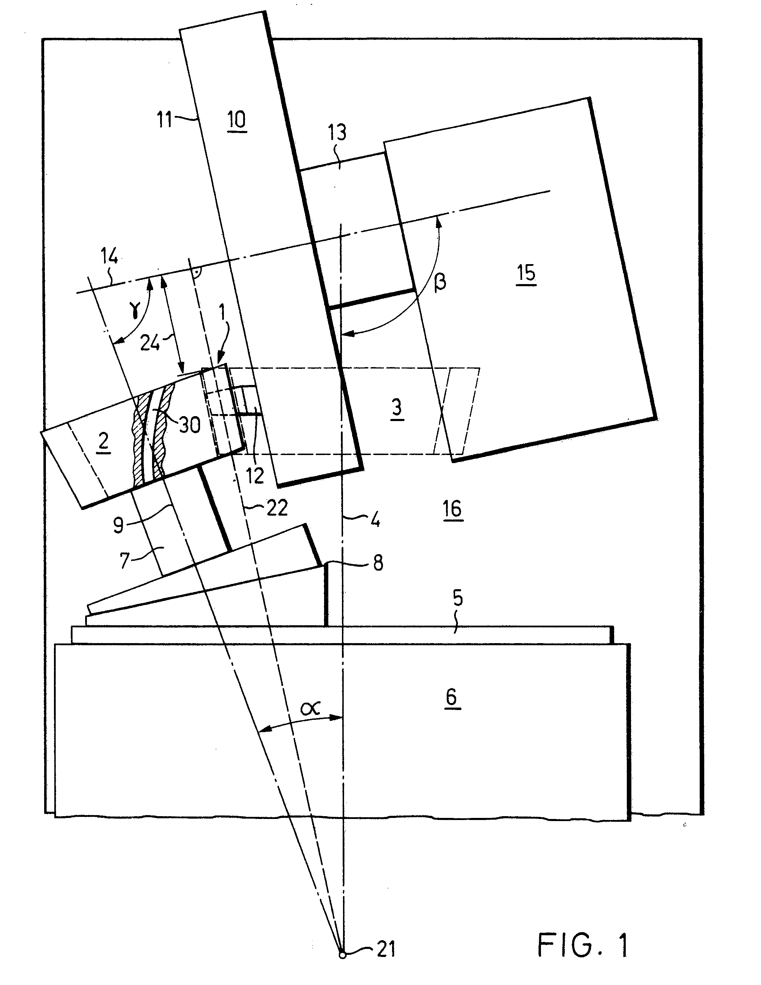

In Fig. 1 erkennt man ein Zahnradpaar 1, bestehend aus einem gerade in Herstellung begriffenen Zahnrad 2 und einem Gegenrad 3, welches hier gestrichelt dargestellt ist, weil es nur gedacht, also nicht wirklich auf einer Wälzachse 4 angeordnet ist. Die nicht näher dargestellten Teilflächen von Zahnrad 2 und Gegenrad 3 berühren sich in einer gemeinsamen Mantellinie 22. Um die Wälzachse 4 drehbar ist eine Wälztrommel 5 in einem Wälzstock 6 gelagert.

Das herzustellende Zahnrad 2 ist über eine erste Spindel 7 und einen Schwenkteil 8 mit der Wälztrommel 5 verbunden. Eine Bearbeitungsachse 9, um welche das Zahnrad 2 auf der Spindel 7 drehbar ist, ist in ihrem Neigungswinkel $\alpha$ zur Wälzachse 4 über den Schwenkteil 8 einstellbar.

Ein Stirnmesserkopf 10, aus dessen Stirnfläche 11 eine Anzahl Messer 12, wovon nur eines dargestellt ist, hervorstehen, ist auf einer zweiten Spindel 13 befestigt. Diese ist um eine Drehachse 14 drehbar in einem Spindelstock 15 gelagert.

Der Wälzstock 6 ist auf einem Sockel 16 festgemacht, während der Spindelstock 15 auf diesem verschiebbar gelagert ist, und zwar derart, daß ein Neigungswinkel $\beta$ zwischen Wälzachse 4 und Drehachse 14 einstellbar ist. Die Spindel 13 ist im Spindelstock 15 senkrecht zur Ebene des Sockels 16 verstellbar.

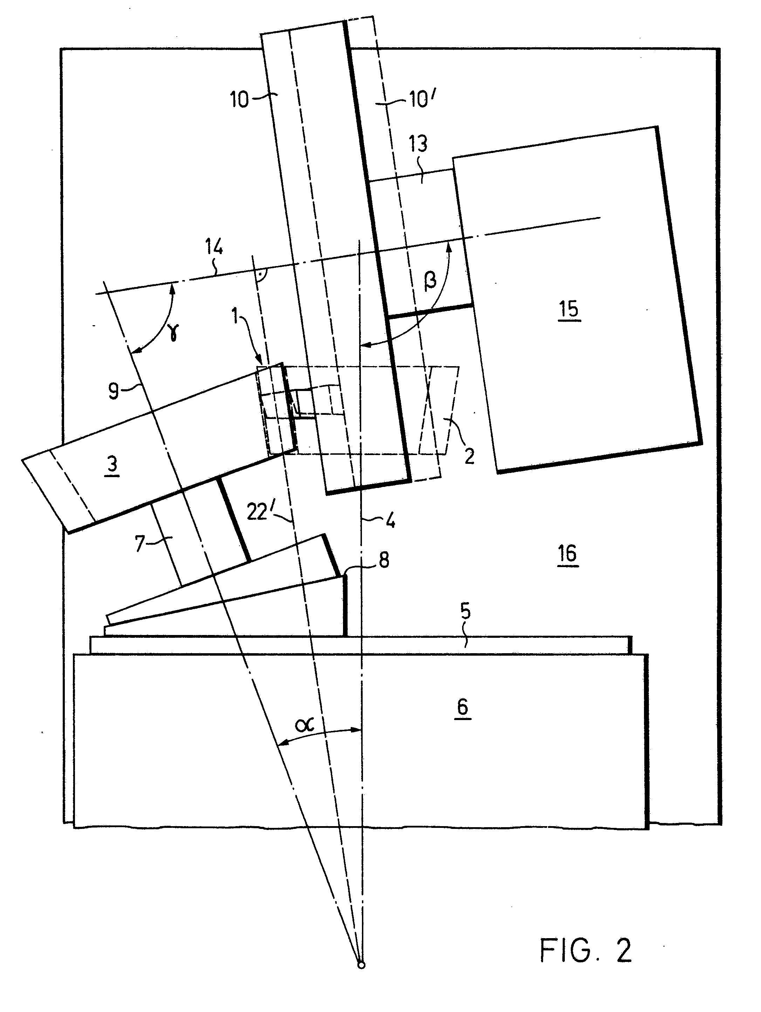

In Fig. 2 erkennt man wiederum das Zahnradpaar 1 bestehend aus dem gerade in Herstellung begriffenen Gegenrad 3 und dem Zahnrad 2, welches hier gestrichelt dargestellt ist, weil es nur gedacht, also nicht wirklich auf der Wälzachse 4 angeordnet ist. Wäre es wirklich vorhanden, so würde das Zahnrad 2 in dieser Stellung mit dem fertiggestellten Gegenrad 3 kämmen. Eine Mantellinie 22' ist den Teilflächen von Zahnrad 2 und Gegenrad 3 gemeinsam. Das Gegenrad 3 ist auf der Spindel 7 befestigt und über den Schwenkteil 8 mit der Wälztrommel 5 verbunden. Die Bearbeitungsachse 9 ist wie in Fig. 1 um den selben Neigungewinkel $\alpha$ gegen die Wälzachse 4 geneigt. Analog Fig. 1 ist der Stirnmesserkopf 10 auf der zweiten Spindel 13 um die Drehachse 14 drehbar im Spindelstock 15 gelagert. Mit 10' ist der Stirnmesserkopf in seiner Stellung vor dem Einstechen in das Gegenrad 3 bezeichnet.

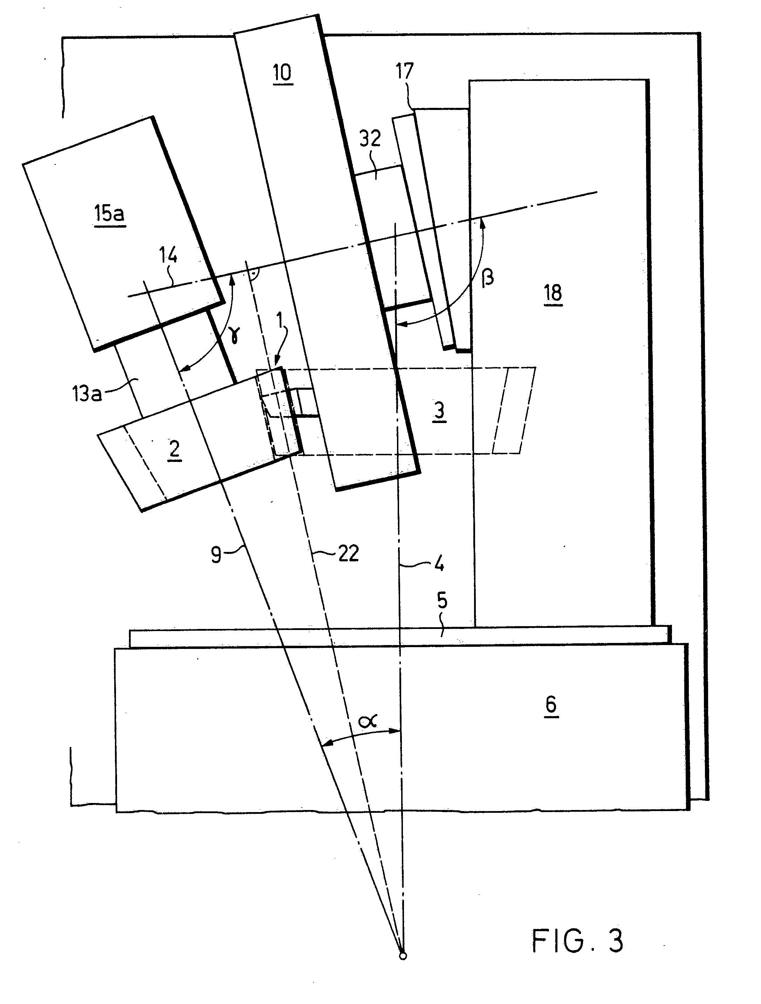

In Fig. 3 erkennt man wiederum das Zahnradpaar 1, welches aus dem Zahnrad 2 und dem gedachten Gegenrad 3 besteht. Das Zahnrad 2 ist hier auf einer zweiten Spindel 13a befestigt und um die Bearbeitungsachse 9 drehbar in einem Spindelstock 15a gelagert.

Der Stirnmesserkopf 10 ist auf einer Spindel 32 befestigt und um die Drehachse 14 drehbar, über einen Schwenkteil 17 in einem Spindelgehäuse 18 gelagert. Dieses ist auf der Wälztrommel 5 angeordnet. Auch hier ist die Bearbeitungsachse 9 mit dem selben Neigungswinkel $\alpha$, gegen die Wälztrommelachse 4 und die Drehachse 14 mit dem selben Neigungswinkel $\beta$ gegen die Wälztrommelachse 4 geneigt.

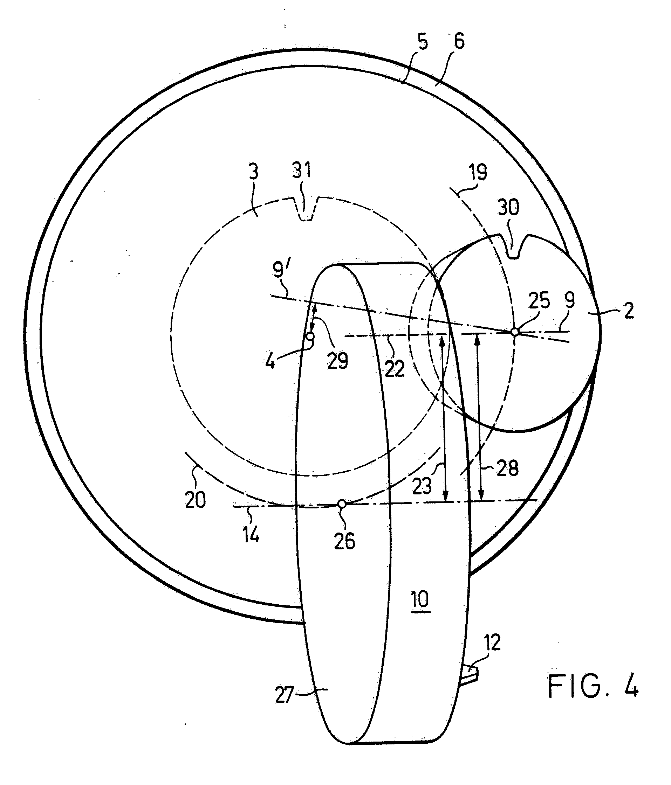

Fig. 4 zeigt schematisch die Anordnung von Zahnrad 2, Gegenrad 3 und Stirnmesserkopf 10, wie sie aus den Fig. 1 und 3 bekannt ist, in einer Ansicht. Die Wälztrommel 5 ist wie bereits bekannt, um die Wälzachse 4 drehbar im Wälzstock 6 gelagert. Ein Schnittpunkt 25 der Stirnfläche des Zahnrades 2 mit der Bearbeitungsachse 9 ist bei einer Anordnung gemäß Fig. 1 auf einem Kreisbogen 19 um die Wälzachse 4 schwenkbar, während bei einer Anordnung gemäß Fig. 3 beispielsweise ein Schnittpunkt 26 der Rückseite 27 des Stirnmesserkopfes 10 um die Wälzachse 4 auf einem Kreisbogen 20 schwenkbar ist. Das Messer 12 greift entsprechend Fig. 1 und 4 in Zahnlücken (30) des Zahnrades 2. Diesem stehen geradflankige Zahnlücken 31 des Gegenrades 3 gegenüber.

Handelt es sich beim Zahnradpaar 1 statt um ein Kegelradpaar um ein achsversetztes Zahnradpaar, so ist das Zahnrad 2 beispielsweise in nicht dargestellter Weise koaxial zu einer Bearbeitungsachse 9', welche die Walzenachse 4 in einem kürzesten Abstand 29 kreuzt.

Wirkungsweise:

Zum Herstellen eines Zahnradpaares 1 nach dem erfindungsgemäßen Verfahren mit einer Anordnung gemäß Fig. 1, d. h. herzustellendes Zahnrad 2 auf der Wälztrommel 5 und Stirnmesserkopf 10 auf dem Spindelstock 15 angeordnet, wird folgendermaßen vorgegangen: Nachdem das Zahnrad 2 auf die erste Spindel 7 und der Stirnmesserkopf 19 auf die zweite Spindel 13 aufgesetzt sind, müssen die Bearbeitungsachse 9 und die Drehachse 14 eingestellt werden. Die Bearbeitungsachse 9 wird durch Neigen der Spindel 7 mit dem Schwenkteil 8 so zur Wälzachse 4 eingestellt, daß der Neigungswinkel $\alpha$, sowie die Lage eines Schnittpunktes 21 bei Kegelrädern oder des kürzesten Achsabstandes 29 (Fig. 4) bei achsversetzten Zahnrädern genau mit den entsprechenden Größen der Achsen der Zahnräder des Zahnradpaares 1 übereinstimmen.

Die Drehachse 14 des Stirnmesserkopfes 10 wird senkrecht gestellt zur Mantellinie 22 (Fig. 1), welche den Teilflächen des Zahnrades 2 sowie des Gegenrades 3 gemeinsam ist. Der senkrechte Abstand 23 (Fig.4) zwischen dieser in Fig. 4 ebenfalls ersichtlichen Mantellinie 22 und der Drehachse 14, sowie der Abstand 24 (Fig.1) zwischen Drehachse 14 und Zahnradpaar 1 richtet sich dabei in an sich bekannter Weise nach dem nicht näher dargestellten Spiralwinkel der Zähne des Zahnrades 2.

Zum Wälzen der Zähne des einen Zahnrades des Zahnradpaares 1, beispielsweise Zahnrad 2 (Fig. 1), wird die Wälztrommel 5 um ihre Wälzachse 4 gedreht. Der Schnittpunkt 25 (Fig. 4) der Stirnfläche des Zahnrades 2 mit der Bearbeitungsachse 9 führt dabei eine Bewegung längs des Kreisbogens 19 aus. Andere Punkte der Bearbeitungsachse führen entsprechend Bewegungen längs anderen Kreisbogen aus, welche aber alle konzentrisch verlaufen.

Zum Herstellen des Gegenrades 3 (Fig. 2) wird nun dieses auf die erste Spindel 7 aufgespannt, welche in derselben Stellung zur Wälzachse 4 verbleiben kann. Die Drehachse 14 des Stirnmesserkopfes 10 dagegen muß neu eingestellt werden und zwar senkrecht zur neuen Mantellinie 22'. Da das Zahnrad 2 nun als gedachtes Gegenrad koaxial zur Wälzachse 4 vorgesehen ist, verläuft diese Mantellinie 22', die den Teilflächen der beiden Zahnräder 2, 3 gemeinsam ist, anders als beim Herstellen des Zahnrades 2, vorausgesetzt Zahnrad 2 und Gegenrad 3 sind nicht gleich groß.

Die übrigen Einstellungen erfolgen wie beim Herstellen des Zahnrades 2, mit dem Unterschied, daß die Zähne des Gegenrades 3 nicht mehr gewälzt werden müssen.

Zum Einstechen wird der Stirnmesserkopf 10' (Fig. 2) axial gegen das Zahnrad 3 vorgeschoben. Dies geschieht je nach Bauart der Maschine, indem der Spindelstock 15 auf dem Sockel 16 in Richtung der Drehachse 14 verschoben wird, oder indem bei feststehendem Spindelstock 15 die zweite Spindel 13 eine Hubbewegung ausführt. Dabei geschieht dies in bekannter Weise, während der Stirnmesserkopf 10 sich um seine Drehachse 14 dreht.

Zum Herstellen eines Zahnradpaares 1 mit Hilfe einer Anordnung gemäß Fig. 3, d. h. herzustellendes Zahnrad 2 auf dem Spindelstock 15a und Stirnmesserkopf 10 auf der Wälztrommel 5 angeordnet, wird folgendermaßen vorgegangen. Wird zuerst das Zahnrad 2 hergestellt, so wird ein dafür geeigneter Rohling auf die Spindel 13a aufgespannt. Der Stirnmesserkopf 10 wird auf die Spindel 32 aufgespannt. Anschließend werden die Bearbeitungsachse 9 durch Neigen der Spindel 13a und die Drehachse 14 durch Neigen der Spindel 32, wie für die Anordnung gemäß Fig. 1, 3 bereits beschrieben, eingestellt.

Das Einstechen erfolgt entsprechend entweder durch eine Hubbewegung der Spindel 32 oder durch Verschieben des Spindelstockes 15a in Richtung der Drehachse 14. Das Verschieben des Spindelstockes 15a bedingt aber, daß die Bearbeitungsachse 9 zuerst in eine nicht dargestellte Ausgangsstellung parallel verschoben wird, so daß der Achsabstand die Zahntiefe etwas übersteigt. Zum Einstechen wird die Bearbeitungsachse 9 dann in die in Fig. 2 gezeichnete Stellung verschoben.

Zum Wälzen der Zähne, beispielsweise des Zahnrades 2, wird die Wälztrommel 5 um ihre Wälzachse 4 gedreht. Der Schnittpunkt 26 (Fig. 4) der Drehachse 14 des Stirnmesserkopfes 10 mit dessen Rückseite 27 führt dabei eine Bewegung längs des Kreisbogens 20 aus. Entsprechend führen andere Punkte der Drehachse 14 beim Wälzen Bewegungen längs anderen, zum Kreisbogen 20 konzentrischen, Kreisbogen aus.

Zum Schneiden von längsballigen Zähnen wird, wie bereits im Schweizer Patent Nr. 594 468 beschrieben, vorgegangen. Ein Abstand 28 (Fig. 4) zwischen der Bearbeitungsachse 9 des herzustellenden Zahnrades 2 und der Drehachse 14 des Stirnmesserkopfes 10 sowie ein Winkel $\gamma$ (Fig. 1, 2, 3) zwischen Bearbeitungsachse 9 und Drehachse 14 werden um je einen bestimmten Betrag verändert. Diese Beträge richten Balligkeit.

Zur Herstellung von achsversetzten Zahnradpaaren wird gleich vorgegangen wie bei der Herstellung von Kegelradpaaren. Die Bearbeitungsachse 9' des nicht dargestellten herzustellenden Zahnrades schneidet dann die Wälzachse 4 nicht mehr, sondern kreuzt diese im kleinsten Abstand 29. Entsprechend anders verläuft auch die gemeinsame Mantellinie.

**Patentansprüche:**

1. Verfahren zur Herstellung von Kegel- und achsversetzten Zahnradpaaren, deren Achsen sich, im Vergleich zum Durchmesser der Zahnräder, in großer Distanz kreuzen, durch Herausschneiden der Zahnlücken (30, 31) mit einem um eine Drehachse (14) rotierenden Stirnmesserkopf (10), dadurch gekennzeichnet, daß nur die Zahnlücken (30) des einen Zahnrades (2) des Zahnradpaares (1) durch eine Wälzbewegung erzeugt werden und die Zahnlücken (31) des Gegenrades (3) des Zahnradpaares (1) nur durch eine Einstechbewegung in Richtung der Drehachse (14) des Stirnmesserkopfes (10) erzeugt werden, daß zur Herstellung des einen Zahnrades (2), der Stirnmesserkopf (10) oder das Zahnrad (2) auf einer Hüllfläche um eine Wälzachse (4) abgewälzt wird, die der Teilfläche des wirklichen Gegenrades (3) entspricht, und daß zur Herstellung des Gegenrades (3) sowohl der Stirnmesserkopf (10) als auch das Gegenrad (3) um ihre Achsen (9, 14) gedreht werden.

2. Verfahren gemäß Anspruch 1, dadurch gekennzeichnet, daß das herzustellende und zu wälzende eine Zahnrad (2) des Zahnradpaares (1) auf einer, auf einer Wälztrommel (5) angeordneten Spindel (7), und der Stirnmesserkopf (10) auf einer, auf einem Spindelstock (15) angeordneten Spindel (13) aufgespannt werden.

3. Verfahren gemäß Anspruch 1, dadurch gekennzeichnet, daß das herzustellende und zu wälzende Zahnrad (2) des Zahnradpaares (1) auf einer, auf einem Spindelstock (15a) angeordneten Spindel (13a), und der Stirnmesserkopf (10) auf einer, über einen Schwenkteil (17) quer aus einer parallel zur Wälzachse (4) verlaufenden Längsseite eines auf einer Wälztrommel (5) angeordneten Spindelgehäuse (18) hervortretenden Spindel (32) aufgespannt wird.

4. Verfahren gemäß Anspruch 1, dadurch gekennzeichnet, daß das Gegenrad (3) des Zahnradpaares (1) auf einer, auf der Wälztrommel (5) angeordneten Spindel (7), und der Stirnmesserkopf (10) auf einer, auf einem Spindelstock (15) angeordneten Spindel (13) aufgespannt werden.

5. Verfahren gemäß Anspruch 1, 2, 3 oder 4, dadurch gekennzeichnet, daß die Zähne von Zahnrad (2) und Gegenrad (3) ballig geschnitten werden, indem ein Abstand (28) zwischen der Achse des herzustellenden Zahnrades oder Gegenrades und der Drehachse (14) des Stirnmesserkopfes (10) sowie ein Winkel ($\gamma$) zwischen der Achse des herzustellenden Zahnrades oder Gegenrades und der Drehachse (14) um einen entsprechend der Balligkeit erforderlichen Betrag verändert werden.

## Claims

1. Process for manufacturing bevel and hypoid gear pairs, the axis of which cross at a large distance in comparison to the diameter of the gears, by cutting-out tooth gaps (30, 31) with a face-mill cutter head (10) which rotates about an axis of rotation (14), characterised in that only the tooth gaps (30) of the one gear (2) of the gear pair (1) are produced by performing a generating movement and the tooth gabs (31) of the mating gear (3) are produced only by performing a plunge-cut movement in a direction of the axis of rotation (14) of the face-mill cutter head (10), that for manufacturing the one gear (2) the face-mill cutter head (10) or the gear (2) is rotated about a generating axis (4) on an addendum envelope which is common to the partial surface of the actual mating gear (3), and that for manufacturing the mating gear (3) the face-mill cutter head (10) as well as the mating gear (3) are rotated about their axis (9, 14).

2. Process as defined in claim 1, characterised by clamping the one gear (2) of the gear pair (1), which is produced by a generating movement, upon a spindle (7) arranged upon a generating drum (5) and by clamping the face-mill cutter head (10) upon a spindle (13) arranged upon a headstock (15).

3. Process as defined in claim 1, characterised by clamping the one gear (2) of the gear pair (1), which is produced by a generating movement, upon a spindle (13a) arranged upon a headstock (15a) and by clamping the face-mill cutter head (10) upon a spindle (32) arranged upon a pivotable part (17) which extends transverse from a front side of a spindle housing (18) which is arranged parallel to the generating axis (4) upon a generating drum (5).

4. Process as defined in claim 1, characterised by clamping the mating gear (3) of the gear pair (1) upon a spindle (7) arranged upon a generating drum (5) and by clamping the face-mill cutter head (10) upon a spindle (13) arranged upon a headstock (15).

5. Process as defined in claim 1, characterised by crown cutting the teeth of the one gear (2) and the mating gear (3) in that there are altered the spacing (28) between the axis of the gear or mating gear to be fabricated and the axis of rotation (14) of the facemill cutter head (10) as well as the angle ($\gamma$) between the axis of the gear or mating gear to be fabricated and the axis of rotation (14) by an amount needed for attaining the tooth crown.

## Revendications

1° Procédé pour réaliser des paires de roues dentées coniques, à axes décalés et dont les axes se croisent à une distance importante par comparaison au diamètre des roues dentées, en dégageant par taillage les entre-dents (30, 31) avec une tête à outils frontaux (10) tournant autour d'un axe de rotation (14), procédé caractérisé en ce que seuls les entre-dents (30) d'une première roue dentée (2) de la paire (1) de roues dentées sont obtenus par un déplacement d'usinage en développante tandis que les entre-dents (31) de la roue conjuguée (3) de la paire (1) de roues dentées, sont uniquement obtenus par un déplacement en plongée dans la direction de l'axe de rotation (14) de la tête à outils frontaux (10), cependant que pour réaliser la première roue dentée (2), la tête à outils frontaux (10) ou bien la roue dentée (2) est déplacée en développante sur une surface enveloppante autour d'un axe d'usinage en développante (4), cette surface enveloppante correspondant à la surface primitive de la roue conjuguée réelle (3), tandis que pour la réalisation de la roue conjuguée (3) aussi bien la tête à outils frontaux (10) que la roue conjuguée (3) sont mises en rotation autour de leurs axes (9, 14).

2° Procédé selon la revendication 1, caractérisé en ce qu'une première roue dentée (2), à réaliser et à usiner en développante, de la paire de roues dentées (1) est bridée sur une broche (7) disposée sur un tambour d'usinage en développante (5), tandis que la tête à outils frontaux (10) est bridée sur une broche (13) disposée sur un bloc de broches (15).

3° Procédé selon la revendication 1, caractérisé en ce que la roue dentée (2), à réaliser et à usiner en développante, de la paire de roues dentées (1) est bridée sur une broche (13a) disposée sur un bloc de broches (15a) tandis que la tête à outils frontaux (10) est bridée sur une broche (32) faisant saillie transversalement, par l'intermédiaire d'une pièce pivotante (17), d'un côté longitudinal, parallèle à l'axe d'usinage en développante (4), d'un boîtier de broche (18) disposé sur un tambour en développante.

4° Procédé selon la revendication 1, caractérisé en ce que la roue conjuguée (3) de la paire de roues dentées (1) est bridée sur une broche (7) disposée sur le tambour d'usinage en développante (5), tandis que la tête à outils frontaux (10) est bridée sur une broche (13) disposée sur un bloc de broche (15).

5° Procédé selon la revendication 1, 2, 3 ou 4, caractérisé en ce que les dents de la roue dentée (2) et de la roue conjuguée (3) sont taillées de façon bombée en modifiant de la quantité nécessaire correspondant au bombement, la distance (28) entre l'axe de la roue dentée à réaliser ou de la roue conjuguée et l'axe de rotation (14) de la tête à outils frontaux (10), ainsi que l'angle ($\gamma$) entre l'axe de la roue dentée à réaliser ou de la roue conjuguée et l'axe de rotation (14).

FIG. 1

FIG. 2

FIG. 3

FIG. 4